(19) Europäisches Patentamt
European Patent Office
Office européen des brevets

(11) EP 2 831 137 B1

(12) **EUROPEAN PATENT SPECIFICATION**

(45) Date of publication and mention of the grant of the patent:
**07.03.2018 Bulletin 2018/10**

(21) Application number: **13716920.7**

(22) Date of filing: **30.03.2013**

(51) Int Cl.:
***B32B 27/06*** *(2006.01)* ***B65D 1/02*** *(2006.01)*
***C09D 167/02*** *(2006.01)* ***C08J 5/18*** *(2006.01)*
***C08G 63/181*** *(2006.01)* ***D01F 6/62*** *(2006.01)*
***B65D 1/40*** *(2006.01)* ***C09D 167/06*** *(2006.01)*
***C08L 67/06*** *(2006.01)* ***B65D 81/28*** *(2006.01)*
***C08L 67/02*** *(2006.01)*

(86) International application number:
**PCT/US2013/034734**

(87) International publication number:
**WO 2013/149221 (03.10.2013 Gazette 2013/40)**

(54) **ARTICLES MADE FROM POLYESTERS**

HERGESTELLTE ARTIKEL AUS POLYESTER

ARTICLES À BASE DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 US 201261618437 P**

(43) Date of publication of application:
**04.02.2015 Bulletin 2015/06**

(60) Divisional application:
**18152798.7**

(73) Proprietor: **E. I. du Pont de Nemours and Company**
**Wilmington, DE 19805 (US)**

(72) Inventors:
- **NEDERBERG, Fredrik**
  **East Amherst, NY 14051 (US)**
- **RAJAGOPALAN, Bhuma**
  **Wilmington, Delaware 19806 (US)**
- **URADNISHECK, Julius**
  **Glen Mills, Pennsylvania 19342 (US)**

(74) Representative: **Dunne, Paul David et al**
**Mewburn Ellis LLP**
**City Tower**
**40 Basinghall Street**
**London EC2V 5DE (GB)**

(56) References cited:
**CN-A- 101 899 145** **US-A1- 2005 100 723**
**US-A1- 2009 018 264** **US-A1- 2009 124 763**
**US-A1- 2010 016 539** **US-A1- 2011 071 238**
**US-A1- 2011 282 020** **US-B1- 6 254 950**

- **DATABASE WPI Week 200901 Thomson Scientific, London, GB; AN 2009-A17075 XP002697509, -& JP 2008 291244 A (MITSUBISHI CHEM CORP) 4 December 2008 (2008-12-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 831 137 B1

## Description

FIELD OF THE INVENTION

This invention relates in general to polyesters and in particular to poly(trimethylene furandicarboxylate) (PTF) and articles made therefrom.

BACKGROUND INFORMATION

Gas barrier properties are one of the key requirements for polymers used in packaging applications to protect the contents and provide desired shelf-life. The prevention of oxygen permeation, for example inhibits oxidation and microbial growth, whereas prevention of water vapor permeation retains liquid content. Many polymers have emerged for these applications such as poly(ethylene terephthalate) (PET), polyethylene (PE), poly(vinyl alcohol) (PvOH), ethylene vinyl alcohol polymer (EvOH), poly(acrylonitrile) (PAN), poly(ethylene naphthalene) (PEN), polyamide derived from adipic acid and m-xylenediamine (MXD6) and poly(vinylidene chloride) (PVdC), and may include additives to enhance barrier properties. However, most of these polymers suffer from various drawbacks. For example, high density polyethylene (HDPE) and low density polyethylene (LDPE) has fair water vapor barrier, but poor oxygen barrier. EvOH exhibits good oxygen barrier at low humidity levels but fails at high levels of humidity. PET has relatively high tensile strength but is limited by low gas barrier properties.

US 2010/100723 A1 discloses improving the gas barrier properties of an aromatic polyester by use of an aromatic dicarboxylic acid, but does not suggest use of poly(trimethylene furandicarboxylate) for this purpose.

There is still a need for a new polymer with improved oxygen, carbon dioxide, and moisture barrier properties.

SUMMARY OF THE INVENTION

The invention provides an article comprising:

a substrate comprising a first surface and a second surface, the second surface in contact with an outside environment.
wherein the substrate comprises a polymer comprising poly(trimethylene furandicarboxylate) (PTF), and
wherein the polymer provides an improvement in gas barrier properties of the substrate as compared to a substrate consisting of nascent poly(ethylene terephthalate) (PET), expressed as:

$$\%\ \text{Improvement} = \frac{G_{PET} - G_{PTF}}{G_{PET}} \times 100$$

where $G_{PTF}$ is the measured gas barrier value for PTF and $G_{PET}$ is the measured gas barrier value for PET and the measured gas is oxygen, carbon dioxide or moisture, wherein oxygen, carbon dioxide and moisture barrier properties are measured according to ASTM D3985-05, ASTM F2476-05, and ASTM F1249-06 respectively,
wherein the improvement for oxygen is in the range of 2-99%, an improvement for carbon dioxide is in the range of 11-99% or 50-98% or 75-96%, and an improvement for moisture is in the range of 3-99% or 25-75%,
and wherein the polymer has a heat of crystallization_of less than 100 J/g, as measured by differential scanning calorimetry with heating rates of 10 °C/min, according to ASTM D3418-08.

In an embodiment, the polymer is a polymer blend comprising PTF and poly (alkylene terephthalate) (PAT) and wherein the polymer blend comprises 0.1-99.9% by weight of PTF based on the total weight of the polymer blend.

In an embodiment, the polymer is a polymer blend comprising PTF and poly (alkylene furandicarboxylate) (PAF) and wherein the blend comprises 0.1-99.9% by weight of PTF based on the total weight of the polymer blend.

In another embodiment, the substrate comprises a polymer disposed in between and in contact with a first layer and a second layer, wherein the first layer is in contact with the first surface of the substrate and the second layer is in contact with the second surface of the substrate, wherein the polymer comprises poly(trimethylene furandicarboxylate) (PTF), and wherein the amount of polymer is in the range of 0.1-99.9% or 5-75% or 10-50% by weight based on the total weight of the first layer, polymer, and the second layer.

In another embodiment, the substrate is in a form of a housing provided with a port for introducing a material, such that the material is in contact with the first surface of the substrate.

In an embodiment, the substrate is in the form of a film or a sheet.

In another embodiment, the polymer is disposed on at least one of the first surface or the second surface of

the substrate as a coating.

## BRIEF DESCRIPTION OF THE DRAWINGS

The invention is illustrated by way of example and not limited to the accompanying figures.

Fig. 1 schematically illustrates a cross-sectional view of a portion of an exemplary article comprising a substrate comprising a polymer comprising poly(trimethylene-2,5-furandicarboxylate), in accordance with the present invention.
Fig. 2 schematically illustrates a cross-sectional view of a portion of an exemplary multilayer substrate comprising a polymer disposed in between and in contact with a first layer and a second layer, in accordance with the present invention.
Figure 3 schematically illustrates a cross-sectional view of a portion of an exemplary article comprising a coated substrate, in accordance with the present invention.
Figure 4 schematically illustrates of a portion of an exemplary article comprising a substrate in a form of a housing provided with a port, in accordance with the present invention.

Reference numerals shown in Figures 1-7 are explained below:

**100:** article
**300:** article comprising a coated substrate **301**
**400:** article comprising a substrate **401** in the form of a housing
**101, 401:** substrate
**201:** multi-layer substrate
**102, 202, 302:** polymer comprising poly(trimethylene-2,5-furandicarboxylate)
**103, 203, 303, 403:** first surface of the substrate
**104, 204, 304, 404:** second surface of the substrate
**213:** first layer
**214:** second layer
**405**: port

## DETAILED DESCRIPTION

Disclosed is an article comprising a substrate, the substrate comprising a first surface and a second surface, the second surface in contact with an outside environment, wherein the substrate comprises a polymer comprising poly(trimethylene furandicarboxylate) (PTF), and wherein the polymer provides an improvement in gas barrier properties of the substrate as compared to a substrate consisting of nascent poly(ethylene terephthalate) (PET).
In an embodiment, the polymer consist essentially of poly(trimethylene-2,5-furandicarboxylate) (PTF) shown below derived from 2,5-furan dicarboxylic acid and 1,3-propanediol polymer:

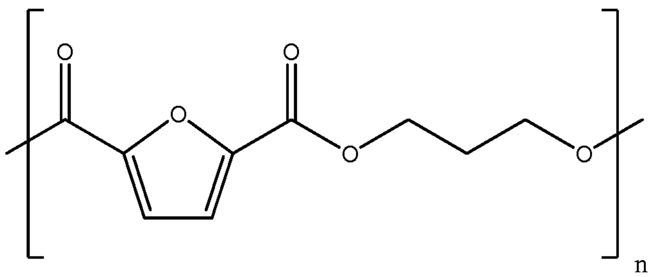

where n=10-1000 or 50-500 or 25-185 or 80-185.
As used herein, the term "nascent PET" refers to PET composition that is 100% PET and has no additives. As used herein, the improvement in gas barrier properties is calculated as the ratio of the difference in gas barrier property between PTF and PET and the PET barrier value, expressed as a % value, as shown below:

$$\%\ \text{Improvement} = \frac{G_{PET} - G_{PTF}}{G_{PET}} \times 100$$

where $G_{PTF}$ is the measured gas (oxygen, carbon dioxide or moisture) barrier value for PTF and $G_{PET}$ is the measured gas (oxygen, carbon dioxide or moisture) barrier value for PET.

As used herein, oxygen barrier properties are measured according to ASTM D3985-05; carbon dioxide barrier properties are measured according to ASTM F2476-05; and moisture barrier properties are measured according to ASTM F1249-06. As used herein, the term "barrier" is used interchangeably with "permeation rate" to describe the gas barrier properties, with low permeation rate of a material implying that the material has a high barrier.

The article can be a film, a sheet, a coating, a shaped or molded article, or a layer in a multi-layer laminate, for example a shrink-wrap film. The article can be a shaped or molded article such as one or more of a container, a container and a lid or a cap, a cap liner or a container and a closure, for example a container such as a beverage container. A film herein can be oriented or not oriented, or uniaxially oriented or biaxially oriented.

As used herein, the term "biologically-derived" is used interchangeably with "bio-derived" and refers to chemical compounds including monomers and polymers, that are obtained from plants and contain only renewable carbon, and not fossil fuel-based or petroleum-based carbon.

Figure 1 schematically illustrates a cross-sectional view of a portion of an exemplary article **100** comprising a substrate **101.** The substrate **101** comprises a first surface **103** and a second surface **104,** the second surface **104** in contact with an outside environment. As shown in Figure 1, the substrate **101** is a single layer film or a sheet. The substrate **101** comprises a polymer **102** comprising poly(trimethylene furandicarboxylate) (PTF), with the polymer **102** providing an improvement in gas barrier properties of the substrate as compared to a substrate consisting of nascent poly(ethylene terephthalate) (PET). The improvement provided by the polymer **102** for oxygen is in the range of 2-99% or 50-98% or 75-96%. The improvement provided by the polymer **102** for carbon dioxide is in the range of 11-99% or 50-98% or 75-96%. The improvement provided by the polymer **102** for moisture is in the range of 3-99% or 25-75%.

The polymer **102** has a heat of crystallization of less than 100 J/g or less than 10 J/g or less than 1 J/g, as measured by differential scanning calorimetry with heating rates of 10 °C/min, according to ASTM D3418-08.

Poly(trimethylene furandicarboxylate) (PTF) can be derived 1, 3 propane diol and any suitable isomer of furan dicarboxylic acid or derivative thereof such as, 2,5-furan dicarboxylic acid, 2,4-furan dicarboxylic acid, 3,4-furan dicarboxylic acid, 2,3-furan dicarboxylic acid or their derivatives.

In one embodiment, the polymer **102** consist essentially of poly(trimethylene-2,5-furandicarboxylate) (PTF) which is derived from 1,3 propane diol and 2,5-furan dicarboxylic acid and is amorphous.

The poly(trimethylene-2,5-furandicarboxylate) (PTF) as disclosed herein can have a number average molecular weight in the range of 1960-196000 or 1960-98000 or 4900-36260. Also, the PTF can have a degree of polymerization of 10-1000 or 50-500 or 25-185 or 80-185.

In one embodiment, the polymer **102** is a polymer blend comprising poly(trimethylene furandicarboxylate) (PTF) and poly(alkylene terephthalate) (PAT), wherein the polymer comprises 0.1-99.9% or 5-75% or 10-50% by weight of PTF based on the total weight of the polymer blend. The poly(alkylene terephthalate) includes units derived from terephthalic acid and a $C_2$-$C_{12}$ aliphatic diol.

In another embodiment, the polymer **102** is a polymer blend comprising poly(trimethylene furandicarboxylate) (PTF) and poly(alkylene furandicarboxylate) (PAF), wherein the polymer comprises 0.1-99.9% or 5-75% or 10-50% by weight of PTF based on the total weight of the polymer blend. The poly(alkylene furandicarboxylate) includes units derived from furan dicarboxylic acid and a $C_2$-$C_{12}$ aliphatic diol.

Poly(alkylene furandicarboxylate) can be prepared from a $C_2 \sim C_{12}$ aliphatic diol and from 2,5-furan dicarboxylic acid or a derivative thereof. In an embodiment, the aliphatic diol is a biologically derived $C_3$ diol, such as 1, 3 propane diol. In a derivative of 2,5-furan dicarboxylic acid, the hydrogens at the 3 and/or 4 position on the furan ring can, if desired, be replaced, independently of each other, with $-CH_3$, $-C_2H_5$, or a $C_3$ to $C_{25}$ straight-chain, branched or cyclic alkane group, optionally containing one to three heteroatoms selected from the group consisting of O, N, Si and S, and also optionally substituted with at least one member selected from the group consisting of -Cl, -Br, -F, -I, -OH, $-NH_2$ and -SH. A derivative of 2,5-furan dicarboxylic acid can also be prepared by substitution of an ester or halide at the location of one or both of the acid moieties.

Examples of suitable $C_2$-$C_{12}$ aliphatic diol include, but are not limited to, ethylene glycol, diethylene glycol, 1,2-propanediol, 1,3-propanediol, 1,4-butanediol, 1,5-pentanediol, 1,6-hexanediol, 1,4-cyclohexanedimethanol, and 2,2-dimethyl-1,3-propanediol.

In an embodiment, the polymer **102** is a copolymer (random or block) derived from furan dicarboxylic acid, at least one of a diol or a polyol monomer, and at least one of a polyfunctional aromatic acid or a hydroxyl acid. The molar ratio of furan dicarboxylic acid to other diacids can be any range, for example the molar ratio of either component can be greater than 1:100 or alternatively in the range of 1:100 to 100 to 1 or 1:9 to 9:1 or 1:3 to 3:1 or 1:1 in which the diol is added at an excess of 1.2 to 3 equivalents to total diacids charged.

Examples of other diol and polyol monomers that can be included, in addition to those named above, in the polymerization monomer makeup from which a copolymer can be made include 1,4-benzenedimethanol, poly(ethylene glycol), poly(tetrahydrofuran), 2,5-di(hydroxymethyl)tetrahydrofuran, isosorbide, isomannide, glycerol, pentaerythritol,

sorbitol, mannitol, erythritol, and threitol.

Examples of suitable polyfunctional acids include but are not limited to terephthalic acid, isophthalic acid, adipic acid, azelic acid, sebacic acid, dodecanoic acid, 1,4-cyclohexane dicarboxylic acid, maleic acid, succinic acid, and 1,3,5-benzenetricarboxylic acid.

Examples of suitable hydroxy acids include but are not limited to, glycolic acid, hydroxybutyric acid, hydroxycaproic acid, hydroxyvaleric acid, 7-hydroxyheptanoic acid, 8-hydroxycaproic acid, 9-hydroxynonanoic acid, or lactic acid; or those derived from pivalolactone, ε-caprolactone or L,L, D,D or D,L lactides.

Exemplary copolymers derived from furan dicarboxylic acid, at least one of a diol or a polyol monomer, and at least one of a polyfunctional acid or a hydroxyl acid include, but are not limited to, copolymer of 1,3-propanediol, 2,5-furandicarboxylic acid and terephthalic acid; copolymer of 1,3-propanediol, 2,5-furandicarboxylic acid and succinic acid; copolymer of 1,3-propanediol, 2,5-furandicarboxylic acid; copolymer of 1,3-propanediol, 2,5-furandicarboxylic acid and adipic acid; copolymer of 1,3-propanediol, 2,5-furandicarboxylic acid and sebacic acid, copolymer of 1,3-propanediol, 2,5-furandicarboxylic acid and isosorbide; copolymer of 1,3-propanediol, 2,5-furandicarboxylic acid and isomannide.

The polymer **102** described hereinabove may contain other components such as plasticizers, softeners, dyes, pigments, antioxidants, stabilizers, fillers and the like. The polymers described herein are of value in all forms of application where currently PET and similar polyesters are used.

Figure 2 schematically illustrates a cross-sectional view of a portion of an exemplary multilayer substrate **201** comprising a polymer **202** disposed in between and in contact with a first layer **213** and a second layer **214,** wherein the first layer **213** is in contact with the first surface **203** of the substrate **201** and the second layer **214** is in contact with the second surface **204** of the substrate **201,** with the polymer **202** comprising poly(trimethylene furandicarboxylate) (PTF). In an embodiment, the amount of polymer **202** is in the range of 0.1-99.9% or 2-80% or 5-50% or 5-25% by weight based on the total weight of the first layer **213,** the polymer **202,** and the second layer **214.**

In an embodiment, the polymer **202** comprises poly(trimethylene-2,5-furandicarboxylate) (PTF), derived from 2,5-furan dicarboxylic acid and 1,3-propanediol polymer. In another embodiment, the polymer **202** is a polymer blend comprising poly(trimethylene furandicarboxylate) and poly(alkylene furandicarboxylate), as disclosed hereinabove. In yet another embodiment, the polymer **202** is a polymer blend comprising poly(trimethylene furandicarboxylate) and poly(alkylene terephthalate), as disclosed hereinabove. In another embodiment, the polymer **202** is a copolymer copolymer derived from furan dicarboxylic acid at least one of a diol or a polyol monomer, and at least one of a polyfunctional acid or a hydroxyl acid, as disclosed hereinabove.

Any suitable material can be used for the first layer **213** and the second layer **214.** In an embodiment, at least one of first layer **213** and the second layer **214** comprises poly(ethylene terephthalate). Exemplary materials for the first layer **213** and the second layer **214** include, but are not limited to PET, HDPE, LDPE, PE, PP, EvOH. In another embodiment, at least one of first layer **213** and the second layer **214** comprises poly(trimethylene furandicarboxylate).

Figure 3 schematically illustrates a cross-sectional view of a portion of an exemplary article **300,** wherein the polymer **302** comprising poly(trimethylene furandicarboxylate) is disposed on at least one of the first surface **303** or the second surface **304** of the substrate **301** as a coating. In an embodiment, the polymer **302** comprises poly(trimethylene-2,5-furandicarboxylate) (PTF), derived from 2,5-furan dicarboxylic acid and 1,3-propanediol polymer. In another embodiment, the polymer **202** is a polymer blend comprising poly(trimethylene-2,5-furandicarboxylate) and poly(alkylene furandicarboxylate), as disclosed hereinabove. In yet another embodiment, the polymer **302** is a polymer blend comprising poly(trimethylene-2,5-furandicarboxylate) and poly(alkylene terephthalate), as disclosed hereinabove. In another embodiment, the polymer **302** is a copolymer copolymer derived from 2,5-furan dicarboxylic acid at least one of a diol or a polyol monomer, and at least one of a polyfunctional aromatic acid or a hydroxyl acid, as disclosed hereinabove. In an embodiment, the substrate **301** is a polymeric. Exemplary materials for the polymeric substrate **301** include, but are not limited to PET, HDPE, LDPE, PE, PP, EvOH. In another embodiment, the substrate **301** is metallic. Exemplary materials for the metallic substrate **301** include, but are not limited to stainless steel, carbon steel, and aluminum.

In one embodiment polymer **302** comprises of PTF or a blend of PTF and Poly(alkylene furandicarboxylate) or a blend of PTF and Poly(alkylene terephthalate) or a copolymer comprising of PTF repeat units that is coated on a substrate that is typically a metal comprising of but not limited to aluminum, stainless steel or carbon steel to provide excellent abrasion resistance quantified as less than 0.01 g weight loss over 1000 cycles in TABER ® tests or preferably less than 0.005 g weight loss over 1000 cycles or desirably less than 0.002 g weight loss over 1000 cycles. Such a coating may provide anti corrosion property.

In an embodiment, the thickness of the coated polymer **302** is in the range of 0.01-2500 microns or 1-1000 microns or 2-500 microns.

In an embodiment, the article **100, 200, 300** can be a film, a sheet, a coating, a shaped or molded article, or a layer in a multi-layer laminate, for example a shrink-wrap film. A film herein can be oriented or not oriented, or uniaxially oriented or biaxially oriented. In an embodiment, the article **100, 200, 300** in the form of a film, a sheet, a coating, a multi-layer laminate is characterized by an oxygen permeability rate that is at least 2-99% or 50-98% or 75-96% lower than PET. In another embodiment, the article **100, 200, 300** in the form of a film, a sheet, a coating, a multi-layer laminate

has a carbon dioxide permeability rate that is at least 11-99% or 50-98% or 75-96% lower than PET. In another embodiment, the article **100, 200, 300** in the form of a film, a sheet, a coating, a multi-layer laminate has water vapor permeability rate that is at least 3-99% or 25-75% lower than PET.

The difference between a sheet and a film is the thickness, but, as the thickness of an article will vary according to the needs of its application, it is difficult to set a standard thickness that differentiates a film from a sheet. Nevertheless, a sheet will be defined herein as having a thickness greater than about 0.25 mm (10 mils). Preferably, the thickness of the sheets herein are from about 0.25 mm to about 25 mm, more preferably from about 2 mm to about 15 mm, and even more preferably from about 3 mm to about 10 mm. In a preferred embodiment, the sheets hereof have a thickness sufficient to cause the sheet to be rigid, which generally occurs at about 0.50 mm and greater. However, sheets thicker than 25 mm, and thinner than 0.25 mm may be formed. Correspondingly, films as formed from the polymers hereof will in be formed. Correspondingly, films as formed from the polymers hereof will in almost all cases have a thickness that is less than about 0.25 mm.

A film herein can be oriented or not oriented, or uniaxially oriented or biaxially oriented. A film comprising a homopolymer PTF and characterized by an oxygen permeability of less than about 100 cc-mil/m$^2$-day-atm (2.90 x 10$^{-19}$ m$^3$-m/m$^2$-s-Pa) or less than 50 cc-mil/m$^2$-day-atm (1.45 x 10$^{-19}$ m$^3$-m/m$^2$-s-Pa) or less than 10 cc-mil/m$^2$-day-atm (2.90 x 10$^{-20}$ m$^3$-m/m$^2$-s-Pa) or less than 8 cc-mil/m$^2$-day-atm (2.32 x 10$^{-20}$ m$^3$-m/m$^2$-s-Pa); or a carbon dioxide permeability of less than about 500 cc-mil/m$^2$-day-atm (1.45 x 10$^{-18}$ m$^3$-m/m$^2$-s-Pa) or less than 250 cc-mil/m$^2$-day-atm (7.25 x 10$^{-19}$ m$^3$-m/m$^2$-s-Pa) or less than 100 cc-mil/m$^2$-day-atm (2.90 x 10$^{-19}$ m$^3$-m/m$^2$-s-Pa) or less than 50 cc-mil/m$^2$-day-atm (1.45 x 10$^{-19}$ m$^3$-m/m$^2$-s-Pa) or less than 25 cc-mil/m$^2$-day-atm (7.25 x 10$^{-20}$ m$^3$-m/m$^2$-s-Pa) or less than 1.7 cc-mil/m$^2$-day-atm (4.93 x 10$^{-21}$ m$^3$-m/m$^2$-s-Pa); or a water vapor permeability of less than 80 g-mil/m$^2$-day-atm (2.32 x 10$^{-16}$ kg-m/m$^2$-s-Pa) or less than 40 g-mil/m$^2$-day-atm (1.16 x 10$^{-16}$ kg-m/m$^2$-s-Pa) or less than 20 g-mil/m$^2$-day-atm (5.80 x 10$^{-17}$ kg-m/m$^2$-s-Pa) or less than 10 g-mil/m$^2$-day-atm (2.90 x 10$^{-17}$ kg-m/m$^2$-s-Pa) or less than 8 g-mil/m$^2$-day-atm (2.32 x 10$^{-17}$ kg-m/m$^2$-s-Pa).

A film comprising a copolymer, PTF-co-PTT with PTF:PTT ratio of less than or equal to 3:1 and characterized by an oxygen permeability of less than about 100 cc-mil/m$^2$-day-atm (2.90 x 10$^{-19}$ m$^3$-m/m$^2$-s-Pa) or less than 50 cc-mil/m$^2$-day-atm (1.45 x 10$^{-19}$ m$^3$-m/m$^2$-s-Pa) or less than 40 cc-mil/m$^2$-day-atm (1.16 x 10$^{-19}$ m$^3$-m/m$^2$-s-Pa) or less than 30 cc-mil/m$^2$-day-atm (8.70 x 10$^{-20}$ m$^3$-m/m$^2$-s-Pa); and water vapor permeability of less than about 80 g-mil/m$^2$-day-atm (2.32 x 10$^{-16}$ kg-m/m$^2$-s-Pa) or less than 60 g-mil/m$^2$-day-atm (1.74 x 10$^{-16}$ kg-m/m$^2$-s-Pa) or less than 50 g-mil/m$^2$-day-atm (1.45 x 10$^{-16}$ kg-m/m$^2$-s-Pa).

A film comprising a polymer blend of 10 weight % PTF with PET and characterized by an oxygen permeability of less than about 120 cc-mil/m$^2$-day-atm (3.48 x 10$^{-19}$ m$^3$-m/m$^2$-s-Pa) or less than 115 cc-mil/m$^2$-day-atm (3.34 x 10$^{-19}$ m$^3$-m/m$^2$-s-Pa) or less than 112 cc-mil/m$^2$-day-atm (3.25 x 10$^{-19}$ m$^3$-m/m$^2$-s-Pa); or a carbon dioxide permeability of less than about 700 cc mil/m$^2$ day atm (2.03 x 10$^{-18}$ m$^3$-m/m$^2$-s-Pa) or less than 600 cc mil/m$^2$ day atm (1.74 x 10$^{-18}$ m$^3$-m/m$^2$-s-Pa) or less than 570 cc mil/m$^2$ day atm (1.65 x 10$^{-18}$ m$^3$-m/m$^2$-s-Pa); or a water vapor permeability of less than about 82 g mil/100 in$^2$ day atm (2.38 x 10$^{-16}$ kg-m/m$^2$-s-Pa) or less than 80 g mil/100 in$^2$ day atm (2.32 x 10$^{-16}$ kg-m/m$^2$-s-Pa).

A housing (bottle, container, jar) comprising PTF monolayer substrate, or PTF multilayer substrate (with PET or other polymer as second substrate) and characterized by an oxygen permeability of less than about 0.04 cc/bottle-day or less than 0.02 cc/bottle-day or less than 0.01 cc/bottle-day or less than 0.008 cc/bottle-day or less than 0.0065 cc/bottle-day; or a carbon dioxide permeability of less than about 6 cc/bottle-day or less than 3 cc/bottle-day or less than 1 cc/bottle-day or less than 0.5 cc/bottle-day or less than 0.10 cc/bottle-day or less than 0.05 cc/bottle-day or less than 0.015 cc/bottle-day or less than; or a water vapor permeability of less than about 0.028 g/bottle-day or less than 3 g-mil/m$^2$-day-atm (8.70 x 10$^{-18}$ kg-m/m$^2$-s-Pa) or less than 2.5 g-mil/m$^2$-day-atm (7.25 x 10$^{-18}$ kg-m/m$^2$-s-Pa) or less than 2 g-mil/m$^2$-day-atm (2.80 x 10$^{-18}$ kg-m/m$^2$-sPa). As used herein, the term "bottle" is used interchangeably with package and the units "cc/bottle-day" with "cc/package-day".

Films and sheets may be formed by any process known in the art, such as extrusion, compression, solution casting or injection molding. The parameters for each of these processes will be determined by the viscosity characteristics of the polyester and the desired thickness of the article. Containers may also be made using blow, injection, injection stretch blow, extrusion blow molding in either 1-2 steps. Coextruded cast sheet with amorphous or crystalline PET with neat or impact modified ethylene copolymers may also be made.

A film or sheet is preferably formed by either solution casting or extrusion. Extrusion is particularly preferred for formation of "endless" products that emerge as a continuous length. For example, see Published P.C.T. applications WO 96/38282 and WO 97/00284, which describe the formation of crystallizable thermoplastic sheets by melt extrusion.

In extrusion, the polymeric material, whether provided as a molten polymer or as plastic pellets or granules, is fluidized and homogenized. This mixture is then forced through a suitably shaped die to produce the desired cross-sectional shape of the article. The extruding force may be exerted by a piston or ram (ram extrusion), or by a rotating screw (screw extrusion), which operates within a cylinder in which the material is heated and plasticized and from which it is then extruded through the die in a continuous flow. Single screw, twin screw and multi-screw extruders may be used

as known in the art. Different kinds of die are used to produce different products, such as sheets manner, films and sheets of different widths and thickness may be produced. After extrusion, the polymeric film or sheet is taken up by rollers, cooled and taken off by means of suitable devices which are designed to prevent any subsequent deformation thereof.

Using extruders as known in the art, a sheet can be produced by extruding a layer of polymer over chilled rollers and then further drawing down the sheet to size greater than 0.25 mm by tension rolls. Preferably, the finished sheet is greater than 0.25 mm thick. For manufacturing large quantities of sheets, a sheeting calendar is employed. The rough sheet is fed into the gap of the calender, a machine comprising a number of heatable parallel cylindrical rollers which rotate in opposite directions and spread out the polymer and stretch it to the required thickness. The last roller smooths the sheet thus produced. If the sheet is required to have a textured surface, the final roller is provided with an appropriate embossing pattern. Alternatively, the sheet may be reheated and then passed through an embossing calendar. The calendar is followed by one or more cooling drums. Finally, the finished sheet is reeled up.

The above extrusion process can be combined with a variety of post-extruding operations for expanded versatility. Such post-forming operations include altering round to oval shapes, stretching the sheet to different dimensions, machining and punching and the like.

The polymeric film or sheet hereof may be combined with other polymeric materials during extrusion and/or finishing to form laminates or multilayer sheets with improved characteristics, such as water vapor resistance. In particular, the polymeric film or sheet hereof may be combined with one or more of the following: polyethylene terephthalate (PET), aramid, polyethylene sulfide (PES), polyphenylene sulfide (PPS), polyimide (PI), polyethylene imine (PEI), polyethylene naphthalate (PEN), polysulfone (PS), polyether ether ketone (PEEK), polyolefins, polyethylene, poly(cyclic olefins) and poly(cyclohexylene dimethylene terephthalate), for example. Other polymers which may be used in combination with the polyester polymer of the invention are those listed in U.S. Application Ser. Nos. 09/064,826 and 09/064,720. A multilayer or laminate sheet may be made by any method known in the art, and may have as many as five or more separate layers joined together by heat, adhesive and/or a tie layer, as known in the art.

A film or sheet may also be formed by solution casting, which produces more consistently uniform gauge product than that made by melt extrusion. Solution casting comprises dissolving polymeric granules, powder or the like in a suitable solvent with any desired formulant, such as a plasticizer or colorant. The solution is filtered to remove dirt or large particles and cast from a slot die onto a moving belt, preferably of stainless steel, whereon the article cools. The article is then removed from the belt onto a windup roll. The extrudate thickness is five to fifteen times that of the finished article, which may then be finished in a like manner to extruded product. Further, sheets and sheet-like articles, such as discs, may be formed by injection molding by any method known in the art; and containers such as bottles can be formed by blow molding.

Regardless of how the film or sheet is formed, it may be subjected to biaxial orientation by stretching in either the machine and transverse direction after formation by 10 times or 5 times or 2 times the original. The machine direction stretch is initiated in forming the article simply by rolling out and taking it up. This inherently stretches the film or sheet in the direction of takeup, orienting some of the fibers. Although this strengthens the article in the machine direction, it allows it to tear easily in the direction at right angles to the machine direction because all of the fibers are oriented in one direction. Therefore, biaxially stretched articles are preferred for certain uses where uniform product is desired, but also where an improved barrier is desired. Biaxial stretching orients the fibers parallel to the plane of the article, but leaves the fibers randomly oriented within the plane thereof. This provides superior tensile strength, flexibility, toughness, barrier and shrinkability, for example, in comparison to non-oriented articles. It is desirable to stretch the article along two axes at right angles to each other. This increases tensile strength and elastic modulus in the directions of stretch. It is most desirable for the amount of stretch in each direction to be approximately equivalent, thereby providing similar properties or behavior within the article when tested from any direction.

Biaxial orientation may be obtained by any process known in the art. However, tentering is preferred, wherein the material is stretched while heating in the transverse direction simultaneously with, or subsequent to, stretching in the machine direction. Shrinkage can be controlled by holding the article in a stretched position and heating for a few seconds before quenching. This heat stabilizes the oriented film or sheet, which then may be forced to shrink only at temperatures above the heat stabilization temperature.

The polymer **102, 202, 302** described hereinabove can be formed into films or sheets directly from the polymerization melt. In the alternative, the polyester may be formed into an easily handled shape (such as pellets) from the melt, which may then be used to form a film or sheet. Sheets can be used, for example, for forming signs, glazings (such as in bus stop shelters, sky lights or recreational vehicles), displays, automobile lights and in thermoforming articles.

Films obtained with polymer **102, 202, 302** as described herein show excellent mechanical properties. Moreover, such films can be subject to bi-orientation in line or after film production. The films can be also oriented through stretching in one direction with a stretching ratio from 1:2 up to 1:15, more preferably from 1:2.2 up to 1:8.

In particular, the polymer **102, 202, 302** as described herein are suitable for manufacturing:

- mono- and bi-oriented films, and films multilayered with other polymers;
- cling or shrink films for use with foodstuffs;
- thermoformed foodstuff packaging or containers, both mono- and multi-layered, as in containers for milk, yogurt, meats, beverages and the like;
- coatings obtained using the extrusion coating or powder coating method on substrates comprising of metals not limited to such as stainless steel, carbon steel, aluminum, such coatings may include binders, agents to control flow such as silica, alumina
- multilayer laminates with rigid or flexible backings such as for example paper, plastic, aluminum, or metallic films;
- foamed or foamable beads for the production of pieces obtained by sintering;
- foamed and semi-foamed products, including foamed blocks formed using pre-expanded articles; and
- foamed sheets, thermoformed foam sheets, and containers obtained from them for use in foodstuff packaging.

In another embodiment, the article can be a shaped or molded article, as shown in Figure 4, such as one or more of a container, a container and a lid, or a container and a closure, for example a container such as a beverage container. Figure 4 schematically illustrates of a portion of an exemplary article **400** comprising a substrate **401** in a form of a housing provided with a port **405** for introducing a material, such that the material is in contact with the first surface **403** of the substrate **401.** The substrate **401** comprises polymer **102, 202, 302,** as disclosed herein above.
In an embodiment, the article **400** in the form of a container has an oxygen permeability rate that is at least 2-99% or 50-98% or 75-96% lower than that of PET. In another embodiment, the article **400** has a $CO_2$ permeability rate that is at least 11-99% or 50-98 or 75-96% lower than that of PET. In another embodiment, the article **400** has water vapor permeability rate that is at least 3-99 or 25-75% lower than that of PET.
In a method of using an article hereof that is fabricated as a container, the container can be exposed to a heated liquid, gas or vapor, such as exposing the container to steam in a retort.
The article as disclosed herein above comprising a polymer comprising PTF can be used for any suitable application, including, but not limited to food and drug packaging, medical devices, personal care products, electronics and semiconductors, paints and coatings, and chemical Packaging.

Method of preparation of Polymer **102, 202, 302**

The various polymers used in an article hereof include polyesters, and also various copolymers (random or block), that may be made according to the selection of which monomers are used for polymerization.
The polymer can be prepared from a $C_2 \sim C_{12}$ aliphatic diol and from 2,5-furan dicarboxylic acid or a derivative thereof. In a derivative of 2,5-furan dicarboxylic acid, the hydrogens at the 3 and/or 4 position on the furan ring can, if desired, be replaced, independently of each other, with $-CH_3$, $-C_2H_5$, or a $C_3$ to $C_{25}$ straight-chain, branched or cyclic alkane group, optionally containing one to three heteroatoms selected from the group consisting of O, N, Si and S, and also optionally substituted with at least one member selected from the group consisting of -Cl, -Br, -F, -I, -OH, $-NH_2$ and -SH. A derivative of 2,5-furan dicarboxylic acid can also be prepared by substitution of an ester or halide at the location of one or both of the acid moieties.
A polymer for use herein can be made by a two-step process, wherein first a prepolymer is made having a 2,5-furandicarboxylate moiety within the polymer backbone. This intermediate product is preferably an ester composed of two diol monomers and one diacid monomer, wherein at least part of the diacid monomers comprises 2,5-FDCA, followed by a melt-polymerization of the prepolymers under suitable polymerization conditions. Such conditions typically involve reduced pressure to remove the excess of diol monomers. Esters of 2,5 furan dicarboxylic acid or the diacid itself or mixtures of both may be used.
For instance, in step (I) dimethyl-2,5-furandicarboxylate is reacted in a catalyzed transesterification process with about 2 equivalents of a diol, to generate the prepolymer while removing 2 equivalents of methanol. Dimethyl-2,5-furandicarboxylate is preferred, as this transesterification step generates methanol, a volatile alcohol that is easy to remove. However, as starting material, diesters of 2,5-furandicarboxylic acid with other volatile alcohols or phenols (e.g. having a boiling point at atmospheric pressure of less than 150°C, preferably less than 100°C, more preferably of less than 80°C) may be used as well. Preferred examples therefore include ethanol, methanol and a mixture of ethanol and methanol. The aforementioned reaction leads to a polyester. Moreover, the diol monomers may if desired contain additional hydroxyl groups, such as glycerol, pentaerythritol or sugar alcohols. The furan diacid may also be used directly, or converted to the diester or can be added along with the diester.
Step (II) of this process is a catalyzed polycondensation step, wherein the prepolymer is polycondensed under reduced pressure, at an elevated temperature and in the presence of a suitable catalyst. In various embodiments of this process, the first step is a transesterification step, catalyzed by a specific transesterification catalyst at a temperature preferably in the range of from about 150 to about 260°C, more preferably in the range of from about 180 to about 240°C and carried out until the starting ester content is reduced until it reaches the range of about 3 mol% to less than about

1 mol%. The transesterification catalyst may be removed, to avoid interaction in the second step of polycondensation, but typically is included in the second step. The selection of the transesterification catalyst is therefore effected by the selection of the catalyst used in the polycondensation step. Tyzor® organic titanates and zirconates catalysts such Tyzor® TPT, Tyzor® TBT can be used. Tin(IV) based catalysts, preferably organotin(IV) based catalysts such as alkyltin(IV) salts including monoalkyltin(IV) salts, dialkyl and trialkyltin(IV) salts and mixtures thereof, can also be used as transesterification such as alkyltin(IV) salts including monoalkyltin(IV) salts, dialkyl and trialkyltin(IV) salts and mixtures thereof, can also be used as transesterification catalysts, that are better than tin(II) based catalysts such as tin(II) octoate. These tin(IV) based catalysts may be used with alternative or additional transesterification catalysts. Antimony based catalysts can also be used.

Examples of alternative or additional transesterification catalysts that may be used in step 1 include one or more of titanium(IV) alkoxides or titanium(IV) chelates, zirconium(IV) chelates, or zirconium(IV) salts (e.g. alkoxides); hafnium(IV) chelates or hafnium(IV) salts (e.g. alkoxides). Other suitable transesterification catalysts are butyltin(IV) tris(octoate), dibutyltin(IV) di(octoate), dibutyltin(IV) diacetate, dibutyltin(IV) laureate, bis(dibutylchlorotin(IV)) oxide, dibutyltin dichloride, tributyltin(IV) benzoate and dibutyltin oxide, antimony oxides.

The active catalyst as present during the reaction may be different from the catalyst as added to the reaction mixture. The catalysts are used in an amount of about 0.01 mol % relative to initial diester to about 0.2 mol % relative to initial diester, more preferably in an amount of about 0.04 mol % of initial diester to about 0.16 mol % of initial diester.

The intermediate product is used as such in the subsequent polycondensation step. In this catalyzed polycondensation step, the prepolymer is polycondensed under reduced pressure, at an elevated temperature and in the presence of a suitable catalyst. The temperature is preferably in the range of about the melting point of the polymer to about 30°C above this melting point, but preferably not less than about 180°C. The pressure should be reduced preferably gradually. It should preferably be reduced to as low as possible, more preferably below 1 mbar (100 Pa).

This second step is preferably catalyzed by a polycondensation catalyst such as one of those listed below, and the reaction is preferably carried out at mild melt conditions. Examples of suitable polycondensation catalysts include octoate, or tin(II) oxalate. Other catalysts include tin(II) salts obtained by the reduction of the tin(IV) catalyst, e.g. alkyltin(IV), dialkyltin(IV), or trialkyltin(IV) salts, antimony based salts used as transesterification catalyst with a reducing compound. Additional catalyst can be added prior to the condensation reaction to increase reaction efficacy. Reducing compounds used may be well-known reducing compounds, preferably phosphorus compounds. Various suitable reducing compounds are organophosphorus compounds of trivalent phosphorus, in particular a monoalkyl or dialkyl phosphinate, a phosphonite or a phosphite. Examples of suitable phosphorus compounds are triphenyl phosphite, diphenyl alkyl phosphite, phenyl dialkyl phosphite, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, di(2,4-di-tert-butylphenyl)pentaerythritol diphosphite, tristearylsorbitol triphosphite, tetrakis(2,4-di-tert-butylphenyl) 4,4'-diphenylenediphosphonite, 4,4'-isopropylidenediphenol alkyl (C12-15) phosphite, poly(dipropylene glycol) phenyl phosphite, tetraphenyl dipropylene glycol phosphite, tetraphenyl diisopropylene glycol phosphite, trisisodecyl phosphite, diisodecyl-phenyl phosphite, diphenyl isodecyl phosphite, and mixtures of these.

In various embodiments, the catalysts therefore include Ti salts such as titanium(IV) alkoxides or titanium(IV) chelates and/or zirconium salts can be used along with reducing agents. Preferably, the reducing compound is added in the melt of the prepolymer. The addition of the reducing compound at this stage will sometimes avoid discoloration of the polymer product and increase molecular weight of the polymer. It is thus found that a combination of transesterification catalyst and polycondensation catalyst that is of particular interest is based on a tin(IV) type catalyst during transesterification, which is reduced, preferably with triphenylphosphite and/or tris(nonylphenyl)phosphite, to a tin(II) type catalyst during the polycondensation.

The catalysts are used in an amount of about 0.01 mol% relative to initial diester to about 0.2 mol% relative to initial diester, more preferably in an amount of about 0.04 mol% of initial diester, to about 0.16 mol% of initial diester.

In solid state polymerization (SSP) processes pellets, granules, chips or flakes of polymer are subjected for a certain amount of time to elevated temperatures (below melting point) in a hopper, a tumbling drier or a vertical tube reactor or the like. The presence of titanium based catalysts during SSP of the FDCA-based polymers has enabled the polymer to reach a number average molecular weight of 20,000 and greater. As compared to SSP as typically used to upgrade recycled PET, the temperature should be elevated but nonetheless remain (well) below the melting point of the polymer.

The concepts disclosed herein will be further described in the following examples, which do not limit the scope of the invention described in the claims.

The examples cited here relate to tannin-based foams. The discussion below describes how PTF based polymers, copolymers and blends and articles made therefrom are formed.

## EXAMPLES

## TEST METHODS

### Molecular Weight by Size Exclusion Chromatography

A size exclusion chromatography system, Alliance 2695™ (Waters Corporation, Milford, MA), was provided with a Waters 414™ differential refractive index detector, a multi-angle light scattering photometer DAWN Heleos II (Wyatt Technologies, Santa Barbara, CA), and a ViscoStar™ differential capillary viscometer detector (Wyatt). The software for data acquisition and reduction was Astra® version 5.4 by Wyatt. The columns used were two Shodex GPC HFIP-806M ™ styrene-divinyl benzene columns with an exclusion limit of 2 x $10^7$ and 8,000/30cm theoretical plates; and one Shodex GPC HFIP-804M™ styrene-divinyl benzene column with an exclusion limit 2 x $10^5$ and 10,000/30cm theoretical plates.

The specimen was dissolved in 1,1,1,3,3,3-hexafluoro-2-propanol (HFIP) containing 0.01 M sodium trifluoroacetate by mixing at 50 °C with moderate agitation for four hours followed by filtration through a 0.45 μm PTFE filter. Concentration of the solution was circa 2 mg/mL.

Data was taken with the chromatograph set at 35°C, with a flow rate of 0.5 ml/min. The injection volume was 100 μl. The run time was 80 min. Data reduction was performed incorporating data from all three detectors described above. Eight scattering angles were employed with the light scattering detector. No standard for column calibration was involved in the data processing.

### Molecular Weight by Intrinsic Viscosity

Intrinsic viscosity (IV) was determined using the Goodyear R-103B Equivalent IV method, using T-3, Selar® X250, Sorona®64 as calibration standards on a Viscotek® Forced Flow Viscometer Modey Y-501C. Methylene chloride/trifluoro acetic acid was the solvent carrier.

### Thermal Analysis

Glass transition temperature (Tg) and melting point ($T_m$) were determined by differential scanning calorimetry (DSC) performed according to ASTM D3418-08.

### Mechanical properties

Tensile properties including top load were generated according to ASTM standard test D638. Drop impact was generated according to Bruceton staircase drop testing method. Tensile strength and elongation on films and bottle sidewalls were measured using Instron® testing equipment.

### $^1$H-NMR Spectroscopy

$^1$H-NMR spectra were recorded on a 400 MHz NMR in either deuterated chloroform ($CDCl_3$) or tetrachloroethane (tce-d2). Proton chemical shifts are reported in ppm downfield of TMS using the resonance of the deuterated solvent as internal standard.

### Gas Barrier Testing

Produced samples were tested for oxygen ($O_2$), carbon dioxide ($CO_2$) and water vapor barrier properties using MOCON instruments according to ASTM methods D3985-05 (oxygen), F1249-06 (water vapor) and F2476-05 (carbon dioxide). Details of the test conditions are given below:

methods D3985-05 (oxygen), F1249-06 (water vapor) and F2476-05 (carbon dioxide). Details of the test conditions are given below:

- Water vapor testing:
    - Testing unit: MOCON PERMATRAN®-W 3/33 or 700 (films)
    - Temperature:37.8°C
    - Permeant: 100% relative humidity

- Oxygen testing:
  - ◦ Testing unit: MOCON OX-TRAN® 2/21 (films and bottle)
  - ◦ Temperature: 23°C
  - ◦ Permeant: 0, 50 or 77% relative humidity
- Carbon dioxide testing:
  - ◦ Testing unit: MOCON PERMATRAN(R)™ C 4/41 (films and bottle)
  - ◦ Temperature: 23°C
  - ◦ Permeant = 100% carbon dioxide, 23°C

**MATERIALS**

As used in the Examples below, PET PQ-325 poly(ethylene terephthalate) (homopolymer), 1,3-propanediol (bioPDO™), and 10 mils (254 microns) thick Kapton® polyimide film, were obtained from the DuPont Company (Wilmington, DE) and were used as received, unless otherwise noted. PET AA72 poly(ethylene terephthalate) 0.82 IV (contains 1.9 mol% isophthalic acid) was obtained from NanYa and used as received. PET F80 poly(ethylene terephthalate) 0.81 IV (contains 1.6 mol% cyclohexyl dimethanol) was obtained from Eastman and used as received. PET Laser+® C9921 poly(ethylene terephthalate) 0.80 IV and PET Laser+® 4000 poly(ethylene terephthalate) 0.84 IV were obtained from DAK Americas (Wilmington, NC) and used as received. Titanium(IV)isopropoxide, ethylene glycol, 1,4-butanediol, and dimethylterephthalate were obtained from Aldrich and used as received. 2,5-furandimethylester (FDME) was obtained from AstaTech Inc. (Bristol, PA) and used as received.

**Example 1: Synthesis and solid phase polymerization of polytrimethylene-2,5-furandicarboxylate (PTF)**

**Preparation of PTF pre-polymers (PTF 1p - PTF 5p) by polycondensation of bioPDO™ and FDME**

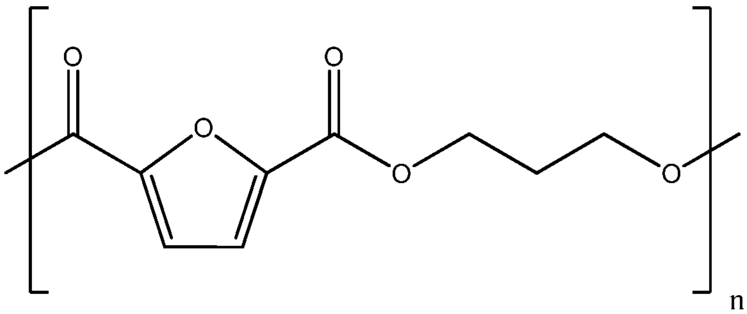

2,5-furandimethylester (2557 g), 1,3-propanediol (1902 g), titanium (IV) isopropoxide (2 g), Dovernox-10 (5.4g) were charged to a 10-lb (4.5 kg) stainless steel stirred autoclave (Delaware valley steel 1955, vessel #: XS 1963) equipped with a stirring rod and condenser. A nitrogen purge was applied and stirring was commenced at 30 rpm to form a slurry. While stirring, the autoclave was subject to three cycles of pressurization to 50 psi (344 kPa) of nitrogen followed by evacuation. A weak nitrogen purge (~0.5 L/min) was then established to maintain an inert atmosphere. While the autoclave was heated to the set point of 240°C methanol evolution began at a batch temperature of 185°C. Methanol distillation continued for 120 minutes during which the batch temperature increased from 185°C to 238°C. When the temperature leveled out at 238°C, a second charge of titanium (IV) isopropoxide (2g) was added. At this time a vacuum ramp was initiated that during 60 minutes reduced the pressure from 760 torr to 300 torr (101 kPa to 40 kPa, pumping through the column) and from 300 torr to 0.05 torr (40 kPa to 6.7 Pa, pumping through the trap). The mixture, when at 0.05 torr, was left under vacuum and stirring for 5 hours after which nitrogen was used to pressurize the vessel back to 760 torr (101 kPa).

The formed polymer was recovered by pushing the melt through an exit valve at the bottom of the vessel and into a water quench bath. The thus formed strand was strung through a pelletizer, equipped with an air jet to dry the polymer free from moisture, cutting the polymer strand into chips ~1/4 inch long and ~1/8 inch in diameter (6.4 mm by 3.2 mm). Yield was approximately 2724 g (~5lbs). Tg was ca. 58°C (DSC, 5°C/min, $2^{nd}$ heat), $T_m$ was ca. 176°C (DSC, 5°C/min, $2^{nd}$ heat). $^1$H-NMR (TCE-d) $\delta$: 7.05 (s, 2H), 4.40 (m, 4H), 2.15 (m, 2H). $M_n$ (SEC) ~ 10 300 D, PDI 1.97. IV ~

0.55dL/g.

Using the same synthetic setup as described above, four other polymerizations were conducted. The summarized reaction setup, and obtained molecular weight characteristics are captured in the Table 1 below.

**Table 1:** Characteristics of PTF pre-polymers.

| Reaction # | Batch temp. (°C) | Condensation time (hrs) | Additive | $M_n$ (g/mol)[1] | PDI[1] | IV (dL/g)[2] |
|---|---|---|---|---|---|---|
| PTF_1p | 223 | 5 | N/A | 4 300 | 1.87 | 0.28 |
| PTF_2p | 228 | 7 | N/A | 5 400 | 1.89 | 0.35 |
| PTF_3p | 238 | 5 | D-10[3] | 10 300 | 1.97 | 0.55 |
| PTF_4p | 248 | 4 | D-10[3] | 9100 | 2.04 | 0.57 |
| PTF_5p | 248 | 3.5 | D-10[3] | n/a | n/a | 0.61 |
| [1] from SEC, [2] from intrinsic viscosity, [3] Dovernox-10 (D-10). | | | | | | |

**Preparation of PTF polymers (PTF 1 - PTF 5) by solid phase polymerization of PTF pre-polymers**

In order to increase the molecular weight of the PTF pre-polymers (described in section 1a above) solid phase polymerization was conducted. The quenched and pelletized PTF pre-polymer was initially crystallized by placing the material in a vacuum oven, subsequently heating the pellets under vacuum and a weak nitrogen purge to 120°C for 120 minutes. At this time the oven temperature was increased to ~163°C and the pellets left under vacuum/nitrogen purge condition to build molecular weight. The oven was turned off and the pellets allowed to cool and analyzed with SEC and IV, for a summary of conditions and obtained molecular weights see Table 2 below.

**Table 2:** Characteristics of solid phased PTF polymers.

| Polymer | PTF pre-polymer used | SPP temp. (°C) | SPP reaction time (hrs) | $M_n$ (g/mol)[1] | PDI[1] | IV (dL/g)[2] |
|---|---|---|---|---|---|---|
| PTF_1 | PTF_1p | 163 | 423 | 11 500 | 1.91 | 0.52 |
| PTF_2 | PTF_2p | 163 | 423 | 13 900 | 2.09 | 0.70 |
| PTF_3 | PTF_3p | 163 | 256 | 18 100 | 1.95 | 0.78 |
| PTF_4 | PTF_4p | 165 | 290 | n/a | n/a | 0.92 |
| PTF_5 | PTF_5p | 165 | 191 | n/a | n/a | 0.86 |
| [1] from SEC, [2] from intrinsic viscosity. | | | | | | |

**Example 2: Preparation of PTF Films (PTF-F) and measurement of their barrier properties**

PTF_3 prepared above was made into a 12.5x12.5 centimeter film by compression molding at 230°C using a heated Pasadena press. Amorphous films thus made were analyzed by DSC to show low levels of crystallinity (< 1 J/g). In order to make semi-crystalline films, some of the amorphous films were annealed over night at 140°C under pressure (5450kg). These films showed a crystallinity of 44-48 J/g as measured using DSC techniques. The film had an area of 50 $cm^2$ and a thickness of 0.17-0.30 mm. The same amorphous film was used for measuring oxygen permeability rate at 23 °C at different relative humidities, as shown in Table 3.

**Table 3:** Oxygen permeability rate of PTF-F-2.1 at different relative humidites.

| Sample # | Polymer used | Percent relative humidity | Oxygen permeability rate (cc mil / $m^2$ day atm) | Oxygen permeability rate ($m^3$-m/$m^2$-s-Pa) |
|---|---|---|---|---|
| PTF-F-2.1 | PTF_3 | 0 | 4.03 | $1.40 \times 10^{-20}$ |
| PTF-F-2.1 | PTF_3 | 50.3 | 5.11 | $1.48 \times 10^{-20}$ |
| PTF-F-2.1 | PTF_3 | 77.4 | 4.34 | $1.26 \times 10^{-20}$ |

The amorphous and crystallized films were tested for oxygen, carbon dioxide and water vapor barrier properties using MOCON instruments and results are summarized in Table 4 below.

**Comparative Example: Preparation of a polyester from 2,5-furandimethylester, and 1,4-butanediol (PBF)**

1,4-butanediol (122.3g, 1.357 mol) and FDME (125 g, 0.678 mol) were polymerized using Tyzor®TPT as catalyst (84 μL) using the same setup as used in Example 3.1 below except the monomer were different. The recovered polymer yield was ~66g. Tg was ~ 39°C, Tm was ~ 169°C. 1H-NMR (tce-d) δ: 7.30 (m, 2H), 4.70-4.30 (m, 4H), 2.0 (m, 4H). Mn (SEC) ~12100g/mol, PDI (SEC) 1.89.

**Comparative Example: Preparation of a polyester from 2,5-furandimethylester, and ethylene glycol (PEF)**

Ethylene glycol (84.2 g, 1.357 mol) and FDME (125 g, 0.678 mol) were polymerized using Tyzor®TPT as catalyst (76 μL) using the same setup as used in Example 3.1 below except the monomers were different. The only difference was that the ester interchange was made at 180°C for 60 minutes and 200°C for 60 minutes. The recovered polymer yield was ~63g. Tg was ~ 89°C, Tm was ~ 214°C (second heating, 10°C). 1H-NMR (tce-d) δ: 7.30 (m, 2H), 4.70-4.30 (m, 4H). Mn (SEC) ~9400g/mol, PDI (SEC) 1.84.

**Procedure for Film preparation for PEF and PBF**

PEF and PBF polymers prepared above were compression molded into 8- 10 micron thick films using a hydraulic platen press. The polymer pellets were placed in a 6 inch by 6 inch (15.2 cm by 15.2 cm) frame supported on Kapton film. The polymer sample and the Kapton® film was placed between two sheets of fiberglass reinforced Teflon® and into press. The press was preheated to the desired temperature (210 °C for PBF, PTF-A and 250 °C for PEF) and the film sandwich was placed between the platen. The platen was subjected to 20,000 psig (138 MPa) pressure was used for a period of 5-8 minutes. The film sandwich was removed and placed between two cooling plates for quenching purposes. The produced film was separated from the Teflon® sheet, and measured for thickness.

**Table 4:** Gas permeability rates for amorphous and crystalline PTF films, PBF and PEF films (ND = Not Determined)

| Sample # | Polymer used | Crystallinity (J/g) | Oxygen (cc mil / $m^2$ day atm) [$m^3$-m/$m^2$-sPa] | Carbon dioxide (cc mil /$m^2$ day atm) [$m^3$-m/$m^2$-sPa] | Water Vapor (g mil / $m^2$ day atm) [kg-m/$m^2$-sPa] |
|---|---|---|---|---|---|
| PTF-F-2.2 | PTF_3 | < 1 | 21 [$6.1 \times 10^{-20}$] | 2.4 [$7.0 \times 10^{-21}$] | 31 [$9.0 \times 10^{-17}$] |
| PTF-F-2.3 | PTF_3 | 46 | 8 [$2.3 \times 10^{-20}$] | 1.7 [$4.9 \times 10^{-21}$] | 7.3 [$2.1 \times 10^{-17}$] |
| Comparative Example PBF-F | PBF | ND | 77 [$2.2 \times 10^{-19}$] | 90 [$2.6 \times 10^{-19}$] | 60 [$1.7 \times 10^{-16}$] |
| Comparative Example PEF-F | PEF | ND | 29 [$8.4 \times 10^{-20}$] | ND | ND |

Films produced from PTF, both amorphous (PTF-F-2.2) and crystallized (PTF-F-2.3) shows an unexpected decrease in gas permeation rates compared to other furan based polyesters such as PEF-F and PBF-F, shown in table 4. Low gas permeation rates imply that these are high gas barrier materials. Even the amorphous PTF film (PTF-F-2.2) shows ~ 28% improvement over PEF and ~ 73% improvement over PBF in oxygen barrier. The crystalline PTF film shows ~ 72% improvement over PEF and ~ 90% improvement over PBF in oxygen barrier. Similarly, the $CO_2$ barrier for PTF is about 98% lower than PBF, depending on the crystallinity of the PTF film. Similarly, the water vapor barrier for PTF is about 70% lower than PBF, depending on the crystallinity of the PTF film. Although not quantified, both PEF and PBF films had substantial crystallinity, indicated by the opaqueness of the produced films.

**Example 3: Synthesis and barrier properties of copolymers (PTF-co-PTT) based on bioPDO™, FDME and dimethylterephthalate**

**Example 3.1: Preparation of copolymers of 2,5-furandimethylester (50mol%), dimethylterephthalate (50mol%), and bioPDO™ (PTF-co-PTT-3.1)**

2,5-furandimethylester (73.6g, 0.4mol), dimethylterephthalate (77.6g, 0.4mol), and bioPDO™ (109.5g, 1.44mol) were charged to a pre-dried 500mL three necked kettle reactor fitted with an overhead stirrer and a distillation condenser. A nitrogen purge was applied to the flask which was kept at a temperature of 23 °C. Stirring was commenced at 50 rpm to form a slurry. While stirring, the flask was evacuated to 0.13 MPa and then repressurized with $N_2$, for a total of 3 cycles. After the first evacuation and repressurization, titanium (IV) isopropoxide (95mg) was added.

After the 3 cycles of evacuation and repressurization, the flask was immersed into a preheated liquid metal bath set at 160°C. The contents of the flask were stirred for 20 min after placing it in the liquid metal bath, causing the solid ingredients to melt. Next, the stirring speed was increased to 180 rpm and the liquid metal bath setpoint was increased to 160 °C. After about 20 minutes, the bath had come up to temperature, after which the metal bath setpoint was increased to 180°C. After about 20 min, the bath had come to temperature. The flask was then held at 180°C still stirring at 180 rpm for an additional 45-60 minutes to distill off most of the methanol being formed in the reaction. Following the hold period at 180°C, the metal bath setpoint was increased to 210°C. After about 20 minutes, the bath had come to temperature. The flask was then held at 210°C still stirring at 180 rpm for an additional 45-60 min after which the nitrogen purge was discontinued, and a vacuum was gradually applied in increments of approximately 1330 Pa every 10 s while stirring continued. After about 60 min the vacuum leveled out at 6500-8000 Pa. The stirring speed was then kept between 50-180rpm and the metal bath set point increased to 230°C. After about 20 min, the bath had come to temperature and the conditions were maintained for ~3 hours.

Periodically, the stirring speed was increased to 180 rpm, and then the stirrer was stopped. The stirrer was restarted, and the applied torque about 5 seconds after startup was measured. When a torque of 75 N/cm or greater was observed, reaction was discontinued by halting stirring and removing the flask from the liquid metal bath. The overhead stirrer was elevated from the floor of the reaction vessel, the kettle removed, and the produced polymer recovered by decanting under a stream of nitrogen gas. The recovered polymer was chopped into pellets using a Wiley mill that was cooled with liquid nitrogen. The so produced polymer pellets were dried under vacuum and a weak nitrogen stream at 50°C for 48 hours. The yield was ~145g. Tg was ~ 53°C, no melting point was observed. $^1$H-NMR (tce-d) δ: 8.05 (m, 4H), 7.15 (m, 2H), 4.70-4.30 (m, 4H), 2.25 (m, 2H). Intrinsic viscosity 0.58 dL/g.

**Example 3.2: Preparation of copolymers of 2,5-furandimethylester (75mol%), dimethylterephthalate (25mol%), and bioPDO™ (PTF-co-PTT-3.1)**

A PTF copolymer was prepared using the procedure described in the Example 1.1 except the relative amounts of 2,5-furandimethylester (75mol%), dimethylterephthalate (25mol%), and bioPDO™. The yield was ~ 90%, or ~145g. Tg was ~ 56°C, no melting point was observed. $^1$H-NMR (tce-d) δ: 8.05 (m, 4H), 7.15 (m, 2H), 4.70-4.30 (m, 4H), 2.25 (m, 2H). Intrinsic viscosity 0.59 dL/g.

**Example 4: Preparation of PTF-co-PTT Copolymer Films (PTF-co-PTT-F) and Measurement of Barrier properties**

PTF copolymers prepared in Examples 3.1 and 3.2 above, as purchased PTT, PTF_4 prepared above, and PET as comparative sample were pressed into 0.15-0.20 mm thick amorphous films using a heated Pasadena press (Model #: P-1250, Pasadena company). Specific conditions used for each film are given in Table 5 below. Two films were created for each sample. As a general procedure, square polymer films were made from a cut mold produced from a 0.25 mm thick Kapton® polyimide film. The polymer sample and the Kapton® film was placed between two sheets of fiberglass reinforced Teflon® and into the Pasadena press. Each sample was preheated at 0 pressure for 8 minutes at 275 C. It was subject to a pressure of 5000 psig (34.5 MPa) for 7 minutes. After the indicated time, the plates were removed from the press and the film quenched in an ice bath. The produced film was separated from the Teflon® sheet, and measured for thickness.

The pressed films were tested for their barrier properties and a summary is given in Table 5 below.

**Comparative Examples A.1: Preparation of PET Films and Measurement of Resulting Barrier Properties**

A procedure similar to that described in Example 5 was used to make PET films, except that instead of using PTF, various grades of PET (PET AA72, PET F80, & PET PQ-325) were used. Barrier properties of PET film are given in Table 5.

**Table 5:** Gas permeation of pressed films.

| Sample # | Polymer used | $O_2$ (cc-mil/m$^2$-day-atm) [m$^3$-m/m$^2$-s-Pa] | Water vapor (g-mil/m$^2$-day-atm) [kg-m/m$^2$-s-Pa] |
|---|---|---|---|
| PTF-co-PTT-F-4.1 | PTF_2.1 | 48.4 [1.40 x $10^{-19}$] | 61 [1.8 x $10^{-16}$] |
| PTF-co-PTT-F-4.2 | PTF_2.2 | 30.3 [8.79 x $10^{-20}$] | 49.8 [1.44 x $10^{-16}$] |
| PTF-F-4.3 | PTF_4 | 20.1 [5.83 x $10^{-20}$] | 38.9 [1.13 x $10^{-16}$] |
| Comparative Example A.1 | PET AA72 | 138.1 [4.01 x $10^{-19}$] | 84.7 [2.46 x $10^{-16}$] |

As seen from Table 5, both copolymers (PTF-co-PTT-F-4.1 and PTF-co-PTT-F-4.2) and the neat PTF film (PTF-F-4.3) provide an improvement in oxygen permeability rate of at least 65% and water vapor permeability rate of at least 28% compared to the comparative PET (PET AA72). It should be noted that the copolymers (PTF-co-PTT-F-4.1 and PTF-co-PTT-F-4.2) did not have any additive for further improvement in barrier properties as compared to PET AA72 which had 1.9 mol% isophthalic acid as comonomer.

**Example 5: Preparation of PTF/PET Blend Films (PTF/PET-F) and Measurement of Resulting Barrier Properties**

**A. Drying of polymer pellets**

Polymer pellets from PET (NanYa AA72) and PTF_4 were individually loaded in aluminum trays and placed in a vacuum oven. Under vacuum and a stream of nitrogen the samples were heated to 120°C and kept for 24 hours to thoroughly remove any residual moisture. The dried pellets were placed and sealed in a plastic container before compounding.

**B. Preparation of a polymer blend**

The dried PET NanYa AA72 and PTF_4 pellets were prior to melt compounding combined to form a batch with a concentration of 10wt% of the PTF pellets based upon the total weight of the blend. The thus combined pellets were mixed in a plastic bag by shaking and tumbling by hand.

The thus mixed batch was placed into a K-Tron T-20 (K-Tron Process Group, Pittman, NJ) weight loss feeder feeding a PRISM laboratory corotating twin screw extruder (available from Thermo Fisher Scientific, Inc.) equipped with a barrel having four heating zones and a diameter of 16 mm fitted with a twin spiral P1 screw. The extruder was fitted with a 3/16" (4.76 mm) diameter circular cross-Section single aperture strand die. The nominal polymer feed rate was 5.6 lbs/hr (2.5 kg/hr). The first barrel Section was set at 180 °C and the subsequent three barrel Sections and the die were set at 240 °C. The screw speed was set at 100 rpm. The melt temperature of the extrudate was determined to be 256 °C by inserting a thermocouple probe into the melt as it exited the die. The thus extruded monofilament strand was quenched in a water bath. Air knives dewatered the strand before it was fed to a cutter that sliced the strand into about 2 mm length blend pellets. The produced blend pellet had an intrinsic viscosity of 0.8 dL/g.

**C. Film preparation**

Produced blend and control sample PTF_4 were pressed into films according to the same procedure given in Example 1 above. Specifics for each produced film are given in Table 6 below, two separate films were created for each sample. The films were made per procedure given in Example 4.

The pressed films were tested for their barrier properties and a summary is given in Table 6 below.

**Comparative Examples A.2, B & C: Preparation of PET Films and Measurement of Resulting Barrier Properties**

A procedure similar to as described in Example 5 was used to make PET films, except that instead of using PTF, various grades of PET (PET AA72 (contains 1.9 mol% isophthalic acid), PET F80 (contains 1.6 mol% cyclohexyl dimethanol) & PET PQ-325 (homopolymer) were used. Barrier properties of PET bottles are given in Table 6.

Table 6: Gas permeation of pressed films.

| Sample # | Polymer used | $O_2$ (cc-mil/m$^2$-day-atm) [m$^3$-m/m$^2$-sPa] | $CO_2$ (cc-mil/m$^2$-day-atm) [m$^3$-m/m$^2$-sPa] | Water vapor (g-mil/m$^2$-day-atm) [kg-m/m$^2$-sPa] |
|---|---|---|---|---|
| PTF/PET-F-5.1 | PTF_4 & PET AA72 | 112.4 [$3.26 \times 10^{-19}$] | 568.6 [$1.65 \times 10^{-18}$] | 80.4 [$2.33 \times 10^{-16}$] |
| PTF-F-5.2 | PTF_4 | 20.1 [$5.83 \times 10^{-20}$] | 22.2 [$6.44 \times 10^{-20}$] | 38.9 [$1.13 \times 10^{-16}$] |
| Comparative Example A.2 | PET AA72 | 138.1 [$4.01 \times 10^{-19}$] | 712.7 [$2.07 \times 10^{-18}$] | 84.7 [$2.46 \times 10^{-16}$] |
| Comparative Example B | PET F80 | 158.5 [$4.60 \times 10^{-19}$] | 807.7 [$2.34 \times 10^{-18}$] | 95 [$2.76 \times 10^{-16}$] |
| Comparative Example C | PET PQ-325 | 144.7 [$4.20 \times 10^{-19}$] | 820.8 [$2.38 \times 10^{-18}$] | 87.8 [$2.55 \times 10^{-16}$] |

As seen from Table 6, a 10 wt% blend of PTF in PET provides an improvement in barrier properties as compared to all comparative copolymer PET (PET AA72 & PET F80) or homopolymer PET (PET PQ-325). The observed improvement for oxygen is at least 18%, for carbon dioxide at least 20%, and for water vapor at least 5% compared with comparative example A.2.

**Example 6: Preparation of preforms and oriented 12 oz. stretch blow molded monolayer bottles (PTF-B-SL-6) from neat PTF and resulting gas permeation**

**A.** Drying of polymer pellets

Polymer pellets from PET (Laser+® C9921) and PTF_4 were dried according to Example 3 above.

**B.** Preparation of injection molded bottle preforms

For the production of bottles 22g preforms were initially injection molded using conventional methods. Specifically, an Arburg 420M single screw injection molding machine was used. The barrel temperature settings of the feed/zone 2/zone 3/zone 4/nozzle were set at 230/230/230/230/230°C for PTF_4. The mold temperature was set at 12°C and the cycle time was 26.5 seconds for both polymers. Regarding pressure conditions for injection and hold, PTF_4 was processed with identical conditions as compared with the PET control. The produced bottle preforms appeared to be of good quality in terms of clarity and shape without any indication of flaws, specs, or buildup of material around the threads or along the preform.

**C.** Preparation of injection stretch blow molded bottles

For the production of bottles the preforms prepared in section B above were injection stretch blow molded using conventional methods. Specifically, a SIDEL SBO 2/3 blow molding machine was used to produce 12 oz (355 ml) bottles. The production rate was 1000 bottles per hour and the blow cycle time ~2.5 seconds per bottle. The PTF_4 preform preblow temperature was ~70°C. The blow condition for PTF_4 was very similar as compared to PET. The produced bottles appeared to be of good optical quality and with adequate mechanical strength. A summary of bottle side wall tensile properties is given in Table 7 below.

**Comparative Example D: Preparation of preforms and 12 oz. stretch blow molded monolayer bottles from neat PET and resulting barrier properties**

A procedure similar to as described in Example 6 was used to make 12 oz. PET bottles, except that instead of using PTF, PET (Laser+® C9921) was used and also the temperature settings were different. For the production of preforms, the barrel temperature settings of the feed/zone 2/zone 3/zone 4/nozzle were set at 268/268/268/268/274°C. For production of blown bottles the PET preform preblow temperature was ~99°C. Typical PET pressure and hold conditions were used for the injection molding, and blow molding step. Tensile strength of PET bottle is given in Table 7.

**Table 7:** Tensile properties of monolayer bottle side walls.

| Sample # | Polymer used | Elongation at break (%) | Tensile strength (MPa) |
|---|---|---|---|
| PTF-B-SL-6 | PTF_4 | 7(+/-3) | 124 (+/-14) |
| Comparative Example D | PET Laser+® C9921 | 6.5 (+/-1) | 103 (+/-7) |

The mechanical properties of bottles produced from PTF are comparable to the PET comparative example D.

A summary of the bottle gas permeation rates is given in Table 8 below.

**Table 8**: Gas permeation of monolayer 12 oz (355 ml) bottles.

| Sample # | Polymer used | $O_2$ (cc/ bottle-day) | $CO_2$ (cc/bottle-day) | Water vapor (g-mil/m$^2$-day-atm) [kg-m/m$^2$-sPa] |
|---|---|---|---|---|
| PTF-B-SL-6 | PTF_4 | 0.00655 | 0.0154 | 2 [5.8 x $10^{-18}$] |
| Comparative Example D | PET Laser+® C9921 | 0.165 | 0.5225 | 3.5 [1.0 x $10^{-17}$] |

As seen from Table 8, the monolayer PTF bottle (PTF-B-SL-6) provides a 96% improvement in oxygen, an 97% improvement in carbon dioxide, and an 43% improvement in water vapor barrier properties compared to the PET comparative example (PET Laser+® C9921). Please note that the stretch ratio between the PTF bottle and the comparative example bottle was the same.

**Example 7: Preparation of preforms and oriented 10 oz. stretch blow molded multilayer bottles (PTF-B-ML-7) from PTF and PET, and resulting barrier properties**

**A. Drying of polymer pellets**

Polymer pellets from PET (Laser+® 4000) and PTF_4 were dried according to Example 3 above.

**B.** Preparation of multilayer injection molded bottle preforms

For the production of multilayer 10 oz (296 ml) bottles 17g multilayer preforms were made in a similar injection molding process explained in Example 3 above. It is well known that a barrier polymer resin is applied as a discrete layer in various packaging options. Typically the barrier layer is surrounded by a structural polymer that provides bulk and mechanical strength. In order to provide a multilayer preform a Kortec multilayer manifold was used that through an annular feed distributes two individual polymer melt flows, processed from two individual single screw extruders, into the preform mold. Here PTF_4 was used as the middle layer at 5 and 10wt% relative the total preform weight, and PET was distributed to provide the outer and inner layers. The barrel temperature settings of the feed/zone 2/zone 3/zone 4 were set at 270/270/270/270°C for PET and 210/230/230/230°C for PTF_4. The mold temperature was set at 12°C and the cycle time was ~31 seconds for all produced preforms. Regarding pressure conditions for injection and hold, the multilayer preforms containing PTF_4 was processed with identical conditions as compared with the PET comparative example. The produced multilayer preforms appeared to be of good quality in terms of clarity and shape without any indication of flaws, specs, or buildup of material around the threads or along the preform. Furthermore, the PTF_4 middle layer was clearly observed when analyzing the preform cross-section.

**C.** Preparation of injection stretch blow molded multilayer bottles

For the production of multilayer bottles the preforms prepared in section B above were injection stretch blow molded using conventional methods. Machine and conditions were similar as in Example 3 above. It is to be noted that the 5 and 10wt% PTF_4 containing preforms processed identical to the PET comparative example. The produced bottles appeared to be of good optical quality and with adequate mechanical strength.

A summary of bottle mechanical properties (tensile, drop impact, adhesion, top load) is given in Table 9 below.

A summary of the multilayer bottle barrier properties is given in Table 10 below.

**Comparative Example E: Preparation of preforms and 10 oz. stretch blow molded monolayer bottles from neat PET and resulting barrier properties**

A procedure similar to as described in Example 6 was used to make 10 oz (296 ml) PET bottles, except that instead of using PTF, PET (Laser+® C9921) was fed in both extruders. The barrel temperature settings of the feed/zone 2/zone 3/zone 4 were set at 270/270/270/270°C. Typical PET pressure and hold conditions were used for the injection molding, and blow molding step.

Tensile strength of PET bottle is given in Table 9 and barrier properties in Table 9.

**Table 9:** Mechanical property summary of multilayer bottles.

| Sample | Amount of PTF_4 layer, based on the total weight of the multi-layers. | Tensile strength (MPa) | Elongation at break (%) | Drop impact mean height (m) | Adhesion (max force for peel, g/in) [g/cm] |
|---|---|---|---|---|---|
| PTF-B-ML-7.1 | 5wt% | 93 (+/- 5) | 4.5 (+/- 0.6) | 2.02 (+/- 0.15) | 10 (+/- 1) [3.9 +/- 0.4] |
| PTF-B-ML-7.2 | 10wt% | 91 (+/- 22) | 4.2 (+/- 0.7) | 2.19 (+/- 0.20) | 30 (+/-3.6) [12 +/- 1.4] |
| Comparative Example E | 0 | 91 (+/- 8) | 4.2 (+/- 0.3) | 1.90 (+/- 0.01) | Peel and tear |

The mechanical properties of multi layer bottles produced from PTF are comparable to the PET comparative example E.

**Table 10:** Multilayer 10 oz. bottle gas permeation summary.

| Sample (10 oz. bottles) | Amount of PTF_4 layer, based on the total weight of the multi-layers. | $O_2$ (cc/bottle-day) | $CO_2$ (cc/bottle-day) | Water vapor (g/bottle-day) |
|---|---|---|---|---|
| PTF-B-ML-7.1 | 5wt% | 0.04 | 5.57 | 0.027 |
| PTF-B-ML-7.2 | 10wt% | 0.034 | 3.6 | 0.028 |
| Comparative Example E | 0 | 0.041 | 6.23 | 0.029 |

As seen from Table 10, the multiayer PTF bottle (5 wt%) provides an 2.4% improvement in oxygen, an 11% improvement in carbon dioxide, and an 7% improvement in water vapor as compared to the PET comparative example(PET Laser+® C9921. Although the multilayer processing was not optimized for improvement in gas barrier properties, improvement was obtained at even low levels of PTF i.e., 5wt%.

The multiayer PTF bottle (10wt%) provides 17% improvement in oxygen, 42% improvement in carbon dioxide, and 3% improvement in water vapor as compared to the PET comparative example (PET Laser+® C9921. These results indicate that as one increases the PTF content in the article such as multilayer bottles, the barrier properties show further improvement. Please note that the stretch ratio between the PTF bottle and the comparative example PET bottle was the same.

**Example 8: Preparation of cast and biaxially oriented films (PTF-F-BiO-8) of PTF 5 and measured barrier**

**A.** Drying of polymer pellets

PTF_5 polymer pellets were dried according to Example 3 above.

**B.** Preparation of cast extruded films

For the production of cast extruded films a 28 mm W&P (Werner & Phleiderer) twin screw extruder was used equipped with a 60/200 mesh filter screen and a 25 cm wide film casting die. PTF_5 pellets were fed similar to Example 3 above and the extruder barrel sections (5 in total) and die were all set at 235°C, the extruder feed temperature was set at 180°C. The feed rate was 15 pounds per hour (6.8 kg/hr) and the extruder screw speed was 125 rpm. The panel melt temperature was measured at 257°C. The film was collected after being cast on a cooling drum with a temperature

set point of 40°C, the measured film thickness was ~0.55 mm and the width was about 22 cm. Following the casting process the produced film was cut into paper sized films (~20x30 cm).

**C.** Preparation of oriented films

For the production of biaxially oriented films a heated Maxi Grip 750 S device was used. Initially 140x140 mm films were cut and loaded into the device. The film was subsequently heated and optimal orientation was possible when the film temperature was in the proximity of 85-86°C, this typically required a preheat time of ~60 seconds. The stretching speed was 23x34%/second which resulted in a stretch ratio of 2.7x3.5, the obtained film thickness was ~60-130 micrometer.

The oriented films were tested for their barrier properties and a summary is given in Table 11 below.

**Table 11:** Gas permeation summary of oriented PTF_5 films.

| Sample # | Polymer used | Film Thickness (μm) | $O_2$ (cc-mil/m$^2$-day-atm) [m$^3$-m/m$^2$-sPa] | $CO_2$ (cc-mil/m$^2$-day-atm) [m$^3$-m/m$^2$-s-Pa] | Water vapor (g-mil/m$^2$-day-atm) [kg-m/m$^2$-sPa] |
|---|---|---|---|---|---|
| PTF-F-BiO-8.1 | PTF_5 | 119 | 17.7 [5.14 x $10^{-20}$] | 86 [2.5 x $10^{-20}$] | - |
| PTF-F-BiO-8.2 | PTF_5 | 71 | - | - | 37.2 [1.08 x $10^{-16}$] |

As seen from Table 11, the biaxially oriented PTF films show oxygen, carbon dioxide, and water vapor permeation values lower as compared to oriented PET reported literature values (Y.S. Hu et al. / Polymer 46 (2005) 2685-2698; Polymer 42 (2001) 2413-2426) are 62-77 cc-mil/m$^2$-day-atm (1.80 x $10^{-19}$ - 2.23 x $10^{-19}$ m$^3$·m/m$^2$·s·Pa) for oxygen, 300-700 cc-mil/m$^2$-day-atm (8.70 x $10^{-19}$ - 2.03 x $10^{-18}$ m$^3$·m/m$^2$·s·Pa) for carbon dioxide, and 23-38 g mil/m$^2$-day-atm (6.7 x $10^{-17}$ - 1.1 x $10^{-16}$ kg·m/m$^2$·s·Pa) for water vapor.

**Example 9: Powder coating of metal substrates with PTF**

PTF polymer pellets were cryo-milled through four passes to produce a powder using a Spex mill. Analysis of the particle size distribution of the milled material was done using a Malvern Mastersizer 2000 particle analyzer in water (both with and without sonication) to give measured values of d(0.5) ~ 54 micron, d(0.9) ~ 145 micron and d(0.1) of 16 micron. The milled powder was applied to a degreased aluminum and carbon steel panels using an electrostatic sprayer and then cured at 380 °C for 20 minutes in a vented convection oven. Examination of these panels showed that the coating produced was clear with an average coating thickness of 3 microns. These coated panels showed excellent abrasion resistance in the TABER® Abraser tester to provide a weight loss of 0.0017 g loss over 1000 cycles using ASTM D3451.

## Claims

**1.** An article comprising:

a substrate comprising a first surface and a second surface, the second surface in contact with an outside environment.
wherein the substrate comprises a polymer comprising poly(trimethylene furandicarboxylate) (PTF), and wherein the polymer provides an improvement in gas barrier properties of the substrate as compared to a substrate consisting of nascent poly(ethylene terephthalate) (PET), expressed as:

$$\%\ \text{Improvement} = \frac{G_{PET} - G_{PTF}}{G_{PET}} \times 100$$

where $G_{PTF}$ is the measured gas barrier value for PTF and $G_{PET}$ is the measured gas barrier value for PET and the measured gas is oxygen, carbon dioxide or moisture, wherein oxygen, carbon dioxide and moisture barrier properties are measured according to ASTM D3985-05, ASTM F2476-05, and ASTM F1249-06 respectively,

wherein the improvement for oxygen is in the range of 2-99%, an improvement for carbon dioxide is in the range of 11-99%, and an improvement for moisture is in the range of 3-99%,
and wherein the polymer has a heat of crystallization_of less than 100 J/g, as measured by differential scanning calorimetry with heating rates of 10 °C/min, according to ASTM D3418-08.

**2.** The article of Claim 1, wherein the polymer is a polymer blend comprising poly(trimethylene furandicarboxylate) (PTF) and poly(alkylene furandicarboxylate), and
wherein the polymer comprises 0.1-99.9% by weight of PTF based on the total weight of the polymer blend.

**3.** The article of Claim 1, wherein the polymer is a polymer blend comprising poly(trimethylene furandicarboxylate) (PTF) and poly(alkylene terephthalate), and
wherein the polymer comprises 0.1-99.9% by weight of PTF based on the total weight of the polymer blend.

**4.** The article of Claim 1, wherein the polymer is a copolymer derived from 2,5-furan dicarboxylic acid at least one of a diol or a polyol monomer, and at least one of a polyfunctional acid or a hydroxy acid, present in a molar ratio of 1:100 to 100, and wherein the molar ratio of diol to diacid is at least 1.2:1.

**5.** The article of Claim 1, wherein the substrate comprises a polymer disposed in between and in contact with a first layer and a second layer, wherein the first layer is in contact with the first surface of the substrate and the second layer is in contact with the second surface of the substrate,
wherein the polymer comprises poly(trimethylene furandicarboxylate) (PTF), and
wherein the amount of polymer is in the range of 0.1-99.9% by weight based on the total weight of the first layer, polymer, and the second layer.

**6.** The article of Claim 5, wherein at least one of the first layer or the second layer comprises poly(ethylene terephthalate).

**7.** The article of Claim 5, wherein at least one of the first layer or the second layer comprises at least one of PTF, PET, HDPE, LDPE, PE, PP or EvOH

**8.** The article of Claim 1, wherein the substrate is in a form of a housing provided with a port for introducing a material, such that the material is in contact with the first surface of the substrate.

**9.** The article of Claim 8 further comprising means for closing the port, such that upon closing the port, the material is isolated from the outside environment.

**10.** The article of Claim 8, wherein the article comprises one or more of a container, a container and a lid, or a container and a closure.

**11.** An article according to Claim 8, wherein the article comprises a beverage container.

**12.** The article of Claim 1, wherein the substrate is in the form of a film or a sheet.

**13.** The article of Claim 1 wherein the polymer is disposed on at least one of the first surface or the second surface of the substrate as a coating.

**14.** The article of claim 13, wherein the at least one of the first surface or the second surface of the substrate comprises metal or plastic.

## Patentansprüche

**1.** Artikel umfassend:

ein Substrat, das eine erste Oberfläche und eine zweite Oberfläche umfasst, wobei die zweite Oberfläche in Kontakt mit einer Außenumgebung steht,
wobei das Substrat ein Polymer umfasst, das Poly(trimethylenfurandicarboxylat) (PTF) umfasst und
wobei das Polymer eine Verbesserung von Gasbarriereeigenschaften des Substrats im Vergleich mit einem Substrat bereitstellt, das aus naszierendem Poly(ethylenterephthalat) (PET) besteht, ausgedrückt als:

$$\% \text{ Verbesserung } = \frac{G_{PET} - G_{PTF}}{G_{PET}} \times 100$$

wobei $G_{PTF}$ der gemessene Gasbarrierewert für PTF ist und $G_{PET}$ der gemessene Gasbarrierewert für PET ist und das gemessene Gas Sauerstoff, Kohlendioxid oder Feuchtigkeit ist, wobei die Sauerstoff-, Kohlendioxid- und Feuchtigkeitsbarriereeigenschaften ASTM D3985-05, ASTM F2476-05 bzw. ASTM F1249-06 entsprechend gemessen werden,
wobei die Verbesserung für Sauerstoff im Bereich von 2 - 99 % liegt, eine Verbesserung für Kohlendioxid im Bereich von 11 - 99 % liegt und eine Verbesserung für die Feuchtigkeit im Bereich von 3 - 99 % liegt,
und wobei das Polymer eine Kristallisationshitze von weniger als 100 J/g, wie durch Differential-Scanning-Kalorimetrie mit Erhitzungsraten von 10 °C/min, ASTM D3418-08 entsprechend gemessen, aufweist.

**2.** Artikel nach Anspruch 1, wobei das Polymer eine Polymermischung ist, die Poly(trimethylenfurandicarboxylat) (PTF) und Poly(alkylenfurandicarboxylat) umfasst und
wobei das Polymer 0,1 - 99,9 Gew.-% PTF, auf das Gesamtgewicht der Polymermischung bezogen, umfasst.

**3.** Artikel nach Anspruch 1, wobei das Polymer eine Polymermischung ist, die Poly(trimethylenfurandicarboxylat) (PTF) und Poly(alkylenterephthalat) umfasst, und
wobei das Polymer 0,1 - 99,9 Gew.-% PTF, auf das Gesamtgewicht der Polymermischung bezogen, umfasst.

**4.** Artikel nach Anspruch 1, wobei das Polymer ein Copolymer ist, das von 2,5-Furandicarbonsäure, mindestens einem von einem Diol oder einem Polyolmonomer und mindestens einer von einer polyfunktionellen Säure oder einer Hydroxylsäure abgeleitet ist, die in einem Molverhältnis von 1: 100 bis 100 vorliegen und wobei das Molverhältnis von Diol zu Disäure mindestens 1,2:1 beträgt.

**5.** Artikel nach Anspruch 1, wobei das Substrat ein Polymer umfasst, das zwischen und in Kontakt mit einer ersten Schicht und einer zweiten Schicht angeordnet ist, wobei die erste Schicht sich in Kontakt mit der ersten Oberfläche des Substrats befindet und die zweite Schicht sich in Kontakt mit der zweiten Fläche des Substrats befindet,
wobei das Polymer Poly(trimethylenfurandicarboxylat) (PTF) umfasst und
wobei die Menge an Polymer im Bereich von 0,1 - 99,9 Gew.-%, auf das Gesamtgewicht der ersten Schicht, des Polymers und der zweiten Schicht bezogen, liegt.

**6.** Artikel nach Anspruch 5, wobei mindestens eine von der ersten Schicht oder der zweiten Schicht Poly(ethylenterephthalat) umfasst.

**7.** Artikel nach Anspruch 5, wobei mindestens eine von der ersten Schicht oder der zweiten Schicht mindestens eines von PTF, PET, HDPE, LDPE, PE, PP oder EvOH umfasst.

**8.** Artikel nach Anspruch 1, wobei das Substrat in Form eines Gehäuses vorliegt, das mit einer Öffnung zum Einführen eines Materials ausgestattet ist, derart, dass das Material sich in Kontakt mit der ersten Oberfläche des Substrats befindet.

**9.** Artikel nach Anspruch 8, ferner ein Mittel zum Verschließen der Öffnung umfassend, derart, dass auf das Verschließen der Öffnung hin das Material von der Außenumgebung isoliert ist.

**10.** Artikel nach Anspruch 8, wobei der Artikel einen oder mehrere von einem Behälter, einem Behälter und einem Deckel oder einem Behälter und einem Verschluss umfasst.

**11.** Artikel nach Anspruch 8, wobei der Artikel einen Getränkebehälter umfasst.

**12.** Artikel nach Anspruch 1, wobei das Substrat in Form einer Folie oder einer Platte vorliegt.

**13.** Artikel nach Anspruch 1, wobei das Polymer auf mindestens einer der ersten Oberfläche oder der zweiten Oberfläche des Substrats als Beschichtung angeordnet ist.

**14.** Artikel nach Anspruch 13, wobei die mindestens eine der ersten Oberfläche oder der zweiten Oberfläche des Substrats Metall oder Kunststoff umfasst.

## Revendications

1. Article comprenant:

   un substrat comprenant une première surface et une seconde surface, la seconde surface étant en contact avec un environnement extérieur,
   le substrat comprenant un polymère comprenant du poly(furandicarboxylate de triméthylène) (PTF), et
   le polymère fournissant une amélioration des propriétés de barrière aux gaz du substrat tel que comparé à un substrat constitué de poly(téréphtalate d'éthylène) (PET) naissant, exprimé sous la forme de:

$$\% \text{ d'amélioration} = \frac{G_{PET} - G_{PTF}}{G_{PET}} \times 100$$

   où $G_{PTF}$ est la valeur de barrière aux gaz mesuré pour le PTF et $G_{PET}$ est la valeur de barrière aux gaz mesuré pour le PET et le gaz mesuré est l'oxygène, le dioxyde de carbone ou l'humidité, les propriétés de barrière à l'oxygène, au dioxyde de carbone et à l'humidité sont mesurées selon la norme ASTM D3985-05, ASTM F2476-05, et ASTM F1249-06 respectivement,
   où l'amélioration pour l'oxygène se situe dans la plage de 2 à 99 %, une amélioration pour le dioxyde de carbone se situe dans la plage de 11 à 99 %, et une amélioration pour l'humidité se situe dans la plage de 3 à 99 %, et le polymère ayant une chaleur de cristallisation inférieure à 100 J/g, telle que mesurée par calorimétrie différentielle à compensation de puissance avec des vitesses de chauffe de 10°C/min, selon la norme ASTM D3418-08.

2. Article selon la revendication 1, le polymère étant un mélange de polymères comprenant du poly(furandicarboxylate de triméthylène) (PTF) et du poly(furandicarboxylate d'alkylène), et
   le polymère comprenant de 0,1 à 99,9 % en poids de PTF sur la base du poids total du mélange de polymères.

3. Article selon la revendication 1, le polymère étant un mélange de polymères comprenant du poly(furandicarboxylate de triméthylène) (PTF) et du poly(téréphtalate d'alkylène), et
   le polymère comprenant de 0,1 à 99,9 % en poids de PTF sur la base du poids total du mélange de polymères.

4. Article selon la revendication 1, le polymère étant un copolymère dérivé d'acide 2,5-furane dicarboxylique, d'au moins l'un parmi un diol ou un monomère de polyol, et d'au moins l'un d'un acide polyfonctionnel ou d'un acide hydroxylique, présents sous un rapport molaire de 1:100 à 100, et le rapport molaire du diol au diacide étant d'au moins 1,2:1.

5. Article selon la revendication 1, le substrat comprenant un polymère disposé entre, et au contact avec, une première couche et une seconde couche, la première couche se trouvant en contact avec la première surface du substrat et la seconde couche se trouvant en contact avec la seconde surface du substrat,
   le polymère comprenant du poly(furandicarboxylate de triméthylène) (PTF), et
   la quantité de polymère se situant dans la plage de 0,1 à 99,9 % en poids sur la base du poids total de la première couche, du polymère, et de la seconde couche.

6. Article selon la revendication 5, dans lequel au moins l'une de la première couche ou de la seconde couche comprend du poly(téréphtalate d'éthylène).

7. Article selon la revendication 5, dans lequel au moins l'une de la première couche ou de la seconde couche comprend au moins l'un parmi le PTF, le PET, le HDPE, le LDPE, le PE, le PP ou l'EvOH.

8. Article selon la revendication 1, le substrat se présentant sous la forme d'un logement prévu avec un orifice d'introduction d'un matériau, de sorte que le matériau se trouve en contact avec la première surface du substrat.

9. Article selon la revendication 8 comprenant en outre un moyen de fermeture de l'orifice, de sorte qu'à l'issue de la fermeture de l'orifice, le matériau soit isolé de l'environnement extérieur.

10. Article selon la revendication 8, dans lequel l'article comprend un ou plusieurs parmi un récipient, un récipient et un couvercle, ou un récipient et une fermeture.

**11.** Article selon la revendication 8, dans lequel l'article comprend un récipient pour boisson.

**12.** Article selon la revendication 1, dans lequel le substrat se présente sous la forme d'un film ou d'une feuille.

**13.** Article selon la revendication 1, dans lequel le polymère est disposé sur au moins l'une de la première surface ou de la seconde surface du substrat comme revêtement.

**14.** Article selon la revendication 13, dans lequel au moins l'une de la première surface ou de la seconde surface du substrat comprend un métal ou une matière plastique.

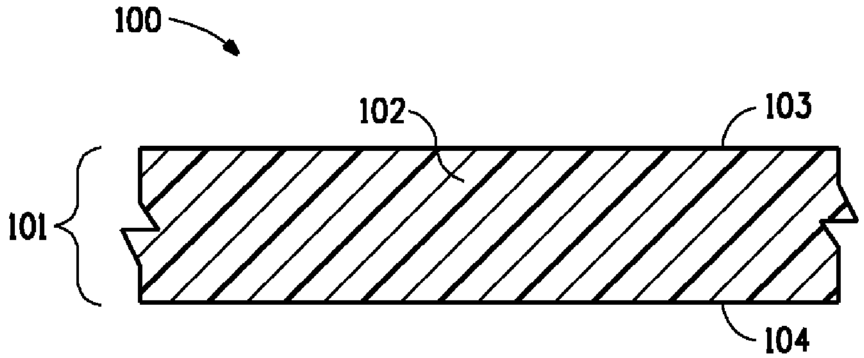


FIG. 1

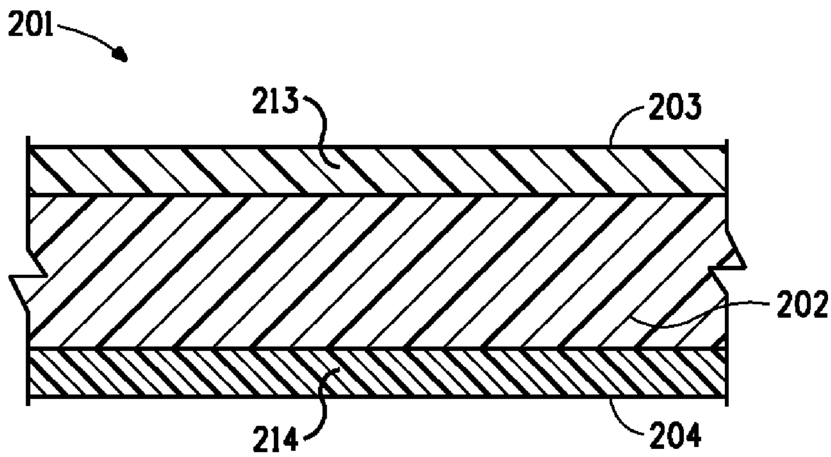


FIG. 2

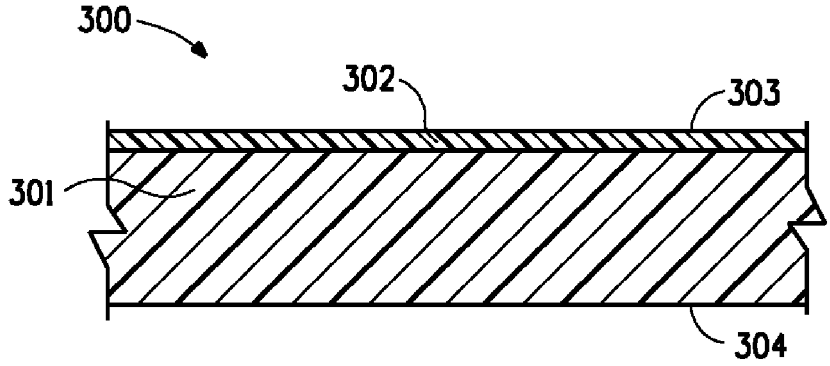


FIG. 3

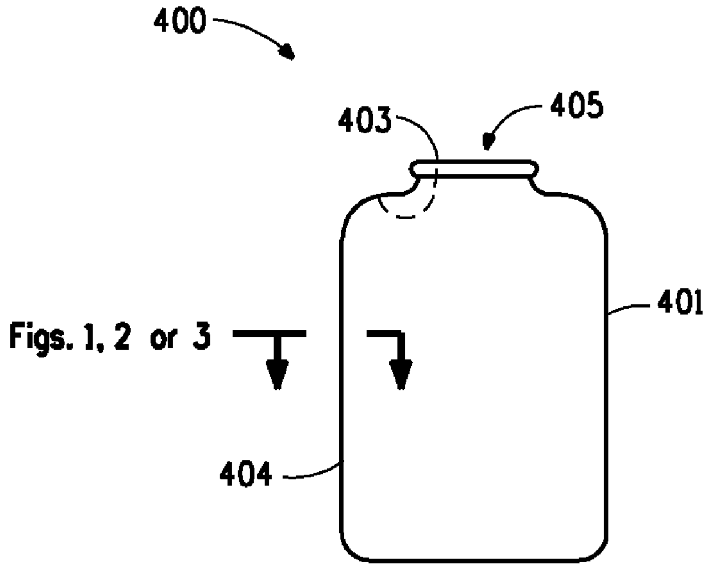


FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010100723 A1
- WO 9638282 A, P.C.T.
- WO 9700284 A
- US 064826 A
- US 09064720 B


### Non-patent literature cited in the description


- **Y.S. HU et al.** *Polymer,* 2005, vol. 46, 2685-2698
- *Polymer,* 2001, vol. 42, 2413-2426